(19) Europäisches Patentamt / European Patent Office / Office européen des brevets

(11) **EP 4 255 200 B1**

(12) **EUROPEAN PATENT SPECIFICATION**

(45) Date of publication and mention
of the grant of the patent:
**22.01.2025 Bulletin 2025/04**

(21) Application number: **21830501.9**

(22) Date of filing: **01.12.2021**

(51) International Patent Classification (IPC):
**A23C 19/068** (2006.01)   **A23C 19/076** (2006.01)
**A23C 19/14** (2006.01)   **A23C 19/08** (2006.01)
**A23C 19/082** (2006.01)   **A23C 19/09** (2006.01)
**A23C 9/123** (2006.01)

(52) Cooperative Patent Classification (CPC):
**A23C 19/09; A23C 19/0684; A23C 19/076;**
**A23C 19/082;** A23C 9/123

(86) International application number:
**PCT/IB2021/061164**

(87) International publication number:
**WO 2022/118207 (09.06.2022 Gazette 2022/23)**

(54) **METHOD OF PREPARATION OF A CHEESE PRODUCT WITH INCREASED SHELF LIFE AND PRODUCT OBTAINED THEREBY**

VERFAHREN ZUR HERSTELLUNG EINES KÄSEPRODUKTS MIT ERHÖHTER HALTBARKEIT UND DADURCH ERHALTENES PRODUKT

PROCÉDÉ DE PRÉPARATION D'UN PRODUIT FROMAGER PRÉSENTANT UNE DURÉE DE CONSERVATION PROLONGÉE ET PRODUIT OBTENU PAR CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2020 IT 202000029558**

(43) Date of publication of application:
**11.10.2023 Bulletin 2023/41**

(73) Proprietor: **Parmital S.r.l.**
**43122 Parma (IT)**

(72) Inventor: **FERRARI, Davide**
**46011 Acquanegra sul Chiese (MN) (IT)**

(74) Representative: **Botti & Ferrari S.p.A.**
**Via Cappellini, 11**
**20124 Milano (IT)**

(56) References cited:
**EP-A2- 0 535 728     EP-B1- 0 535 728**
**US-A- 4 324 804**

- BLANCHETTE L ET AL: "Production of Cottage Cheese Using Dressing Fermented by Bifidobaceria", JOURNAL OF DAIRY SCIENCE, AMERICAN DAIRY SCIENCE ASSOCIATION, US, vol. 79, no. 1, 1 January 1996 (1996-01-01), pages 8 - 15, XP027047935, ISSN: 0022-0302, [retrieved on 19960101]

**Description**

PRIOR ART

It is known that cheese production involves nowadays very different application techniques, which are in turn related to the determination of finished products having organoleptic and dietary characteristics and very different textures (for example think about the considerable differences between firm-bodied cheese such as grana cheeses or parmesan cheeses and "soft" cheeses or highly creamy cheeses such as gorgonzola or roquefort).

In cheese production, a very important chemical-physical phenomenon is the so-called cheese maturation (ripening), that is the stage during which any cheese takes on specific organoleptic characteristics (appearance, color, texture, taste and aroma) and wherein transformation of glucides (as well as lactose), proteins and lipids mainly occurs by means of suitable enzymes.

Transformation phenomena during cheese maturation are strongly influenced by many factors, including for example water and salt amount, the so-called "free-water activity" (in particular, when said parametric value is higher than 0.96), pH, temperature and environment humidity, the ratio of the so-called "macro-nutrients" and also the form and the size of the cheese: in particular, during maturation of the cheeses belonging to the categories of "fresh cheeses" or of "soft cheeses", a strong degradation of macro-nutrients is carried out by milk enzymes and bacteria (bacteria which in turn can be naturally occurring, or intentionally added to the processing ingredients).

The main transformations occurring during maturation are:

- glucides transformation (where lactose present in the curd is transformed by lactic bacteria into ethyl alcohol, carbon dioxide and lactic acid, and wherein the latter is in turn transformed into aromatic compounds and/or into calcium lactate);

- protein (and in particular casein) transformation, which produces the most evident variations of the body, which becomes more or less soft and colored, and of the taste: and

- lipids transformation (by the action of the enzymes of the microorganisms), which produces considerable modifications of cheese characteristics since highly aromatic substances, such as medium-short-chain fatty acids which are typical of milk, are released.

During these transformations, it should be paid particular attention to the action of lactic acid and of the enzymes (in particular, of proteolytic enzymes), which causes cleavage of part of the casein in suitable amino acids and peptides (which in turn confer the cheese particular aromas and tastes when it is "finished" and stabilized by a chemical/physical point of view): said cleavages soften the so-called "body" of the cheese and degrade it, and stronger/more intense, in terms of softening effects, in "fresh" and/or "soft" cheeses compared to the so-called "hard" and/or "aged" cheeses.

Amino acid degradation results also in the formation of different chemical species (for example, amines, aldehydes, ammonium, phenols, indoles and alcohols) which contribute to the determination of the aroma of a given cheese, such as for example the so-called decarboxylation, which concerns the conversion of a given amino acid into its corresponding amine: the concentration of each amine depends on the type of cheese and on the so-called "microflora".

Soft/fresh cheeses are the typologies of dairy product which are the most sensitive to the effects of lipids transformation, since, for example:

- in sheep and goat cheeses, a spicier and more aromatic taste is created due to the higher content of medium-short-chain fatty acids (capronic, caprylic and caprynic), and said taste feature is evident only when these fatty acids are cleaved by triglycerides during maturation; or also

- in the so-called "blue-veined" fresh/soft cheeses, there is a particular intensity of action due to the added molds, which in turn produce the so-called "ketonic rancidification" (wherein specific chemical species, known as methyl-ketones, are present in the finished product, said methyl-ketones conferring the particular spicy taste to these cheeses).

It should also be observed that in soft and/or fresh cheeses there is a higher availability of free water (and therefore of higher "activity" of the same), and this involves a stronger bacterial metabolism and a resulting release of microbial enzymes (besides those already naturally present in milk): this condition contributes to determine an early structural, sensorial and organoleptic degradation of these specific cheese typologies.

In the light of the prior art set forth above, it is to be noted that cheeses classifiable in the categories of "fresh" and/or "soft" have several drawbacks connected to their logistical management and to their distribution and conservation. In more detail, it is to be observed that the above described chemical-physical reasons described above, fresh or soft cheese have a very limited period of conservation (or "durability"), even if they are stored at controlled temperature (usually, between 4 °C and 8 °C), indicatively between 15 and 20 days up to a maximum of 60 days: the fact that this period is very limited is a great disadvantage from a commercial point of view, restricting the "range of action" of sale for said products and moreover generating a considerable problem of stock of returned and/or unsold products (currently, said returned/unsold stocks are sent to become waste or to degrading fusion processes).

The publication Journal of Diary Science, 79(1), 1992, p. 8-15 describes the preparation of a cottage cheese with fat content equal to 4.5% obtained by preparing a curd and by adding thereto a cream fermented with bifidobacteria; the goal of the work is to demonstrate the viability of bifidobacteria inserted inside a cottage cheese.

Patent application US 4 324 804 describes the preparation of a creamy dairy product with a fat percentage of at least 33%, obtained by mixing a firm-bodied cream cheese curd and a cultured cream cheese dressing mix product; the goal is to obtain a cheese which maintains creaminess and spreadability at refrigerator temperature.

Patent application EP 0 535 728 exemplifies the preparation of a dairy product with fat content equal to 45%, obtained by mixing a non-matured cheese (mozzarella) with a matured cheese (Cheddar cheese); the goal of this publication is to provide a process for the production of a cheese having taste and texture of a naturally matured cheese, without the need for long maturation periods.

SUMMARY OF THE INVENTION

In consideration of the drawbacks related to the intrinsic nature of the above mentioned "fresh cheeses" or "soft cheeses", the goal of the present invention is to use an innovative and original method of preparation of said types of cheeses which reduces or minimizes said drawbacks, and which therefore brings about a significant increase of the "commercial useful life" (or, in colloquial terms of the art, of the so-called "shelf life") of this kind of food.

At the same time, the method according to the invention aims to obtain a dairy product, also definable as "compound", which is completely similar, in terms of characteristic taste and features, to a corresponding "fresh" or "soft" cheese produced according to traditional techniques, and that said definition of product/compound can also be applied to a wide range of different types or commercial denominations of cheese belonging to said product categories.

Moreover, it is to observe that the present method aims to produce a dairy product/compound having among the raw materials for its production unsold fresh and soft cheeses which are typically close to their expiry (provided that they are in a good general state of conservation, under the sensorial and organoleptic profile, in addition to satisfying the obvious criteria in terms of food safety), thereby implementing an efficient way to recycle and revalue said products which would otherwise be a food waste and a considerable economic loss in terms of disposal and management.

The method according to the present invention comprises the following steps:

- providing a quantity of fresh and/or soft cheese, said fresh and/or soft cheese having a standard shelf life between 15 days and 60 days, and being in a state of conservation close to expiry of said conservation period;

- providing a quantity of acid coagulum;

- mixing said quantities of fresh and/or soft cheese and acid coagulum, thereby obtaining a quantity of a re-processed dairy product; and

- eliminating an excess moisture from said quantity of fresh and/or soft cheese and/or from said quantity of acid coagulum and/or from said quantity of re-processed dairy product,
  wherein:

   (a) each of said fresh and/or soft cheese, acid coagulum and re-processed dairy product has a composite average fat content between 15% and 32% by weight and the respective composite average fat contents differ from each other by maximum 5%;

   (b) the acid coagulum is added to the fresh and/or soft cheese in a weight ratio lower than or equal to 2:1, and

   (c) the step of providing the acid coagulum comprises the sub-step of preparing a pasteurized mixture comprising whole and/or skimmed milk and cream, said pasteurized mixture preferably having an alkaline phosphatase value lower than 350 mU/l, and wherein it also includes one of the following sub-steps:

   - inducing a lactic fermentation of said pasteurized mixture through inoculation of said pasteurized mixture with mesophilic and/or thermophilic lactic bacteria at a temperature between 20 °C and 40°C, said inoculation leading to an acid coagulum having a pH between 4.3 and 5; or

- adding lactic acid to said pasteurized mixture, said addition causing an acid coagulum having a pH between 5.2 and 5.9,

and wherein said state close to expiry of the conservation period is calculated as T=P/2, where T is the time point from which the cheese can be used in the method and P is its standard shelf life measured at +6°C.

As referred above, the respective composite average fat contents of said fresh and/or soft cheese, acid coagulum and re-processed dairy product differ from each other by maximum 5% (being for example 20%, 22% and 27%; or 16%, 20% and 23%, etc.).

DETAILED DESCRIPTION OF THE INVENTION

In the expression "fresh and/or soft cheese" used herein, the term "cheese" strictly identifies a dairy product which has concluded all the steps for providing it as "cheese" according to food regulations; therefore, the term "fresh and/or soft cheese" excludes intermediates of cheese preparation, for example curds, wheys, etc.: this is in compliance with the goal of the invention, which consists in recovering and giving value to finished fresh cheeses, which are already in full trading and selling condition as "cheese", but are close to their expiry period. Moreover, the definition "fresh and/or soft cheese" strictly identifies a product which has its own denomination corresponding to a recognized variety of fresh and/or soft cheese (for example crescenza, stracchino, mozzarella, etc.); this therefore excludes "cheese derivatives" such as mixtures of dairy products, etc.

The fresh and/or soft cheese used in the invention is characterized by a standard shelf life (also defined commercial durability, and indicated on the package according to the reference legislation) between 15 days and 60 days.

As referred above, the fresh and/or soft cheese used in the invention is further characterized in that it is "in a state of conservation close to expiry of the conservation period"; said expression, according to the present invention, identifies a product which is in the final half of its shelf life; said final half is defined according to the calculation T=P/2, where T is the time point from which the cheese can be used in the process according to the present invention and P is the standard shelf life; for example, for a conservation period of 20 days, T=10 and the cheese will be usable from the 10th day of conservation; in the case of conservation periods which are not multiples of 2, the result of the calculation is rounded down to the closest unit: for example, for a conservation period of 19 days, T=9,5 is rounded down to 9, and the cheese will be usable from the from the ninth day of conservation.

The term "close to expiry" excludes the use of the cheese after said expiry; however, by "use" is meant the moment when the cheese undergoes the beginning of the process; it is therefore possible and included in the invention that a fresh and/or soft cheese subjected to the beginning of the process at a conservation time compliant with the above-mentioned calculation exceeds the expiry of the conservation period during said process.

All the above-mentioned conservation periods are meant as assessed under "shelf condition", that is under standard conditions of conservation (in particular, temperature) suitable for the fresh and/or soft cheese used; in a non-limiting way, standard temperature conditions for this type of cheeses are generally between +4 and +8° C, for example +6°C.

Optionally, the fresh and/or soft cheese used in the process may comprise one or more of the following additional characteristics:

- a moisture between 45% and 65% by weight of the quantity of said cheese;

- a dry extract between 30% and 55% by weight of the quantity of said cheese;

Contrary to the fresh and/or soft cheese, the "acid coagulum" added thereto in the present process is never a cheese, but is only the result of the coagulation procedure; therefore, said acid coagulum has not been subjected to all the steps which could possibly make a cheese out of it. The acid coagulum used in the dairy sector, used herein, has a pH in the range 4.5-6.0. Typically, a preparation of the acid coagulum may comprise one or more of the following sub-steps:

- mixing milk and cream;

- carrying out a lactic fermentation of milk and/or said cream and/or of the starting fresh and/or soft cheese;

- adding lactic acid to the milk and/or cream and/or to the starting fresh and/or soft cheese.

According to the present invention, it is to observe that a deviation of the pH value of the "final compound" (namely the re-processed dairy product) with respect to that of the starting fresh/soft cheese should not exceed ± 1, since it was experimentally observed that higher relative pH variations are related to substantial modifications of the quality and the organoleptic characteristics of said final product: this is due to the fact that, since the pH value expresses the concentration of hydrogen ions available in the compound being processed, it indicates possible excessive shifts of the reaction equilibria including, indeed, an abnormal incidence of reactions involving hydrogen bonds which form with the carboxyl groups present (and said abnormal incidence would eliminate the benefits achievable with the present method/process of preparation).

As a working example, imagining processing, in accordance to the present method, a "starting" soft blue-veined cheese, it can be observed that usually this type of product has a pH equal to about 5.9: therefore, the final compound (or re-processed dairy product) should have a pH not higher than 6.9 and not lower than 4.9.

Regarding the relative percentages (and the resulting absolute amounts in the composition of the resulting re-processed dairy product) of the "starting" cheese and of acid coagulum, it was observed that the quantity by weight of acid coagulum (typically deriving from milk and cream) which can be added to the fresh and/or soft cheese should not exceed twice the quantity of the fresh and/or soft cheese: said proportioning is aimed, according to the invention, to maintaining the minimum sensorial and organoleptic characteristics of the cheese which is being re-processed and it was determined by technological tests performed on field (said tests allowed to prove that the sensorial characteristics of fresh and/or soft cheeses which are being re-processed are clearly perceivable, in the similar final compound, only with percentages higher than 30 %).

In accordance with the above-mentioned requirements, in the present process, the acid coagulum is added to the fresh and/or soft cheese in a weight ratio lower than or equal to 2:1, and preferably between 1:1 and 2:1: the compliance with said proportioning, suitably studied considering the maximum degree of pH variability of the fresh and/or soft cheeses and of acid coagula usable in the dairy sector, ensures to obtain a re-processed dairy product with a maximum pH variation between +1 and -1 compared to the starting fresh and/or soft cheese. The re-processed dairy product so obtained maintains organoleptic and sensorial (i.e. gustatory and olfactory) characteristics that correspond as much as possible to those of the starting "fresh and/or soft" cheese.

Turning back to the example of the blue-veined soft cheese, each 100 Kg of the latter can be supplemented with maximum 200 Kg acid coagulum (thereby obtaining in the re-processed dairy product percentages by weight of 33.3 % for the blue-veined cheese and 66.6 % for the acid coagulum).

In the present process, each of said fresh and/or soft cheese, acid coagulum and re-processed dairy product has a composite average fat content between 15% and 32% by weight; within said range, the respective composite average fat contents may be varied as desired, thereby obtaining different degrees of correspondence with values typical of products of the type "soft and/or fresh cheese" normally commercially available.

In other words, the present invention is based on mixing in variable portions (but according to the above-mentioned criterion of relative amounts) cheese "close to expiry" and acid coagulum maintaining a criterion of "compositional alignment", i.e. adding a milk/cream mixture whose fat content is substantially the same as the starting fresh or soft cheese (net of the above-mentioned tolerances).

The above mentioned criterion of compositional alignment has the goal of not distorting the macro-compositional properties of the "starting" fresh or soft cheese which is to re-process, with particular focus on the fat content present (which is valuable also from a health point of view, in addition to the energetic point of view), thereby obtaining a final composition comparable and similar to the starting cheese.

Further regarding the operational details of the method, the step of eliminating an excess moisture may be performed according to one or more of the following sub-steps:

- separating said excess moisture by centrifugation;

- separating said excess moisture by ultrafiltration;

- separating said excess moisture by evaporation in depression or concentration; and

- separating said excess moisture by filtration.

The step of providing fresh and/or soft cheese may be implemented by introducing said fresh and/or soft cheese into a processing vessel- for example - made of steel and, still by way of example, comprising suitable stirring means (arranged inside the processing vessel and typically comprising at least one rotary blade at a speed not exceeding 10 rpm), as well as suitable heating means (associated with the processing vessel and typically active on the fresh and/or soft cheese and on the acid coagulum by direct injection of steam or by thermal exchange through a wall of the processing vessel).

The step of providing the acid coagulum may be implemented by preparing a pasteurized mixture comprising whole and/or skimmed milk and cream: said pasteurized mixture has preferably an alkaline phosphatase value lower than 350mU/l. The final/definitive preparation of the acid coagulum may be achieved by one of the following sub-steps:

- inducing a lactic fermentation of the pasteurized mixture through inoculation of said pasteurized mixture with mesophilic and/or thermophilic lactic bacteria at a temperature between 20 °C and 40°C (this inoculation determines an acid coagulum having a pH between 4.3 and 5); or

- adding lactic acid to the pasteurized mixture (this addition causes an acid coagulum having a pH between 5.2 and 5.9).

Turning back to the example introduced with regard to the "blue-veined soft cheese" (and hypothesizing its fat content equal to 27%), and bearing in mind the criterion of compositional alignment already introduced in the present description, the result is that the acid coagulum deriving from the milk/cream mixture should have the same fat content of the starting blue-veined soft cheese (with the above described tolerance): therefore, supposing to start from a milk/cream mixture with fat titer equal to 15 %, from said mixture an appropriate percentage of milk whey should be extracted in order to obtain a value consistent with the criterion of said compositional alignment.

Even more in detail, in the example already introduced, the percentage of milk whey to eliminate would be equal to 45%, according to the following calculation formula:

$$B = [100 \times (C - A)]/C$$

Wherein the symbolic letters A, B, and C represent, respectively:

- "A" the average content (as a percentage) of fat of the starting milk/cream mixture;

- "B" the amount (as a percentage) of milk whey to extract from the starting milk/cream mixture; and

- "C" the average content (as a percentage) of fat which should result from the extraction, that is the average fat content which should substantially correspond to that of the starting fresh/soft cheese according to the criterion of compositional alignment of the present invention.

According to the invention, the step of mixing the fresh cheese may take place in the forementioned processing vessel, while maintaining one or more of the following operating parameters:

- a stirring temperature between 50 °C and 95 °C; and

- a residence time, at said stirring temperature, at least equal to or greater than 2 minutes.

From the operational point of view, the heating temperature is not aimed to obtain the pasteurization of the compound, instead, the heat is provided with the main goal of dissolving the ingredients and activating the chemical-physical transformations already illustrated according to the invention: in that sense, the temperature range indicated can also be varied based on texture and the creaminess of the "starting" cheese which is being re-processed.

The present method may finally comprise a step of packaging the (re-processed) dairy product: said operational step may conveniently be carried out while maintaining a temperature of the product equal to the corresponding temperature held during the step of mixing the fresh and/or soft cheese to the acid coagulum, and it can be further carried out by sending the re-processed dairy product into appropriate hermetically sealed containers.

## EXAMPLES

To completely integrate the descriptive information intelligible by a person skilled in the art (regarding the effects of the present invention), in the following are reported, by way of a non-limiting example, experimental evidences which verify the effects - and validate the hypotheses of physical-chemical phenomena underlying said effects - of adding the acid coagulum (consisting of milk and/or cream) to the fresh/soft cheese which is being re-processed (which naturally melts down by thermal effect) under the predetermined and specific conditions of the process according to the invention.

As regards the physical-chemical effects underlying the invention, it was discovered that, at the base of the present method, a "dilution" effect is created between the intact protein chains of the fresh/soft product added (that is, of the protein chains of the acid coagulum) and those broken down or partially broken down in amino acid sequences deriving from the fresh/soft cheese which has to be re-processed (that is, of the protein chains of the product "close to expiry" which are responsible for the structural and sensorial degradation of said product): without intending to be bound by theory, we think that said dilution affects binding equilibria of the protein and amino acid structure of the cheese - and in particular the available free amino and carboxylic groups - attracting and "trapping" the free water present in the product resulting on the whole during processing.

According to the method, and with the postulated (and validated) hypotheses for said method, trapping free water makes it less available to the processes of bacterial and enzymatic degradation of the food, and this results in an increased shelf life with simultaneous and synergistic maintenance of the organoleptic and sensorial (gustatory/olfactory) characteristics of the "pure" product to be re-processed.

The just mentioned advantageous synergistic effect is confirmed by the experimental analytical data collected, from which can be inferred a reduction of the value of the free-water activity "aW", in the final compound, compared to the single aW values which can be found in the starting cheese and in the milk/cream mixture (or, in other words, of the so-called acid coagulum) added to the cheese which is being re-processed: said reduction causes a significant increase of the durability of the compound, compared to the one which can be conventionally found in the fresh or soft cheese to be re-processed, as demonstrated in the successive shelf life tests performed.

In addition to the experimentations performed in terms of the determination of the increased shelf life, several practical tests of production were performed at authorized centers of dairy transformation, and it is noteworthy that also said practical tests of production (or, very similarly and according to the present invention, of re-processing of fresh or soft cheeses close to their expiry date) confirmed a greater durability of the product obtained by the process, said durability being further confirmed by shelf life verifications performed by third accredited authorities.

In particular, from the experiment campaigns performed can be observed that the durability of the final compound/product is clearly higher than that of the fresh and/or soft cheese, while the structural, organoleptic, sensorial, gustatory and olfactory features remain stable for a period longer than 90 days.

Significantly, the qualitative results observed are also found applying criteria of the so-called "thermal stress" to the packaging of the dairy product/compound obtained according to the present method: in particular, it was applied to a product obtained starting from the processing of the "crescenza" soft cheese, an increase of the conservation temperature equal to 6 °C (therefore, the storage conditions at controlled temperature were performed at 10 °C instead of at the usually known and regulations-compliant temperature of 4 °C) and, despite the presence of said thermal stress, a durability longer than 90 days compared to a conventional durability of 20 days (at a temperature of +4°C) was detected for a "crescenza" dairy product prepared according to prior-art technologies.

To validate the method of the invention, as well as to verify the hypotheses about the chemical-physical phenomena implemented by said method, it should be noted that the essential parameter of analytical investigation is the above mentioned "(free-)water activity" or "activity water" (a parameter which can be usually referred to with the acronym "aW"), which indeed expresses water activity, on which almost all the processes of fermentation and enzymatic degradation of macro-nutrients of the food / product depend.

The above mentioned statement finds confirmation in an appropriate verification campaign in laboratory, commissioned to an external accredited authority (STUDIO F2 SRL, based in Piazza Morselli, 2 46014 Castellucchio (MN) and having "Accredia number" 800), and the verification campaign was in turn performed according to ISO 18787:2017 standard.

In said verification campaign, the aW of a blue-veined soft cheese with 40 days maturation and of a soft generic ("crescenza") table cheese with 15 days maturation were analyzed, developing two different tests in different working session, after which the aW of the acid coagulum of milk/cream added to the cheeses, and finally that of the final compounds obtained, were analyzed.

The different types of product/compound under analysis were sampled in 5 aliquots derived from the same "stock mass" of the same product or compound, to maximize the accuracy and the statistic reproducibility of the average analytical datum obtained, and moreover, as a countercheck, the aW of the cheeses to be re-processes was analyzed, after an analogous thermal process, but without the addition of acid coagulum (N.B.: it is therefore a so-called "blank" test), to assess the possible interference of heating and re-mixing on the parameter aW.

The analyses were performed on November 23, 2020, while all samplings are performed by skilled personnel of the laboratory in charge, during a working session of November 20, 2020: moreover, all aliquots of the sample, once collected, were immediately vacuum sealed in a plastic thermoshrinkable small bag, having perfect hermetic sealing, and were conserved in the refrigerator at +4°C until analysis.

The data collected by the experiment campaigns are summarized below in the following table:

| Sample description | aW aliquot 1 (sr 0.02) | aW aliquot 2 (sr 0.02) | aW aliquot 3 (sr 0.02) | aW aliquot 4 (sr 0.02) | aW aliquot 5 (sr 0.02) | Average datum aW |
|---|---|---|---|---|---|---|
| **Blue-veined soft cheese 40 days** | 0.974 | 0.971 | 0.974 | 0.973 | 0.972 | 0.973 |
| **Generic soft cheese 15 days** | 0.981 | 0.980 | 0.980 | 0.982 | 0.979 | 0.980 |

(continued)

| Sample description | aW aliquot 1 (sr 0.02) | aW aliquot 2 (sr 0.02) | aW aliquot 3 (sr 0.02) | aW aliquot 4 (sr 0.02) | aW aliquot 5 (sr 0.02) | Average datum aW |
|---|---|---|---|---|---|---|
| Acid coagulum from milk cream | 0.989 | 0.989 | 0.991 | 0.990 | 0.991 | 0.990 |
| Final compound blue-veined soft cheese | 0.937 | 0.935 | 0.940 | 0.939 | 0.940 | 0.938 |
| Final compound generic soft cheese | 0.947 | 0.945 | 0.947 | 0.945 | 0.948 | 0.946 |
| Blue-veined soft cheese, heated, without any addition | 0.972 | 0.971 | 0.972 | 0.970 | 0.973 | 0.972 |
| Generic soft cheese, heated, without any addition | 0.980 | 0.979 | 0.982 | 0.981 | 0.982 | 0.980 |

As evident in the above table, the data show a clear reduction of the aW value between the starting "pure" soft cheeses and the final compound obtained following the process according to the invention: note that the values detected for the final compound are also lower than those detected for the added acid coagulum, obtained from milk and cream.

Note also that an aW variation which at first glance appears minimal (from 0.973 to 0.938, in the case of the blue-veined cheese) affects in an exponential and highly selective way the bacterial metabolism and enzymatic degradation.

The evidence of the collected analytical data validates therefore the efficacy of the method according to the invention, as well as the outcome resulting from the new chemical bonds which occur during the step of mixing the two components (soft/fresh cheese to re-process and acid coagulum), under the specific conditions and process parameters of the method described, and finally confirms that, as a countercheck, the thermal and re-mixing effect of the "blank" test performed on a single soft cheese has almost no effect on the parameter aW (which remains unvaried in both tests).

The method according to the invention, and therefore the dairy products/compounds which can be prepared by said method, obtain considerable advantages over the prior art.

First of all, it should be noted - as confirmed by the performed experiment campaign - the considerable increase of the shelf life period, which in some cases may triple: this reflects on a higher efficiency of the distribution chain (as both a possibility of transportation to greater distances from production sites and of residence time on the shelves in the points of sale) and on a resulting lower incidence of management costs for all subjects involved in the production chain, logistics and retail sale of said products.

Simultaneously, one should note the organoleptic, olfactory, and gustatory quality of the dairy products that can be prepared by the method of the invention, which are completely similar to the "pure" products (but are in the condition of being close to expiry for the final consumption) and are therefore completely comparable also in terms of retail price, perceived quality and satisfaction of the end customer (and of his/her consumption needs).

The last but not the least advantageous characteristic of the invention is the extreme operational flexibility, which results in the possibility of re-processing a broad range of products belonging to the categories of fresh and/or soft cheeses (even blue-veined cheeses) with constant results and therefore with an even greater capability to make production sites and the distribution chain more efficient.

**Claims**

1.  Method of preparation of a dairy product, **characterized in that** it comprises the following steps:

    • providing a quantity of fresh and/or soft cheese, said fresh and/or soft cheese having a standard shelf life between 15 days and 60 days, and being in a state of conservation close to expiry of said conservation period;
    • providing a quantity of acid coagulum;
    • mixing said quantities of fresh and/or soft cheese and acid coagulum, thereby obtaining a quantity of a re-processed dairy product; and
    • eliminating an excess moisture from said quantity of fresh and/or soft cheese and/or from said quantity of acid coagulum and/or from said quantity of re-processed dairy product,

    wherein:

(a) each of said fresh and/or soft cheese, acid coagulum and re-processed dairy product has a composite average fat content between 15% and 32% by weight and the respective composite average fat contents differ from each other by maximum 5%,

(b) the acid coagulum is added to the fresh and/or soft cheese in a weight ratio lower than or equal to 2:1, and

(c) the step of providing the acid coagulum comprises the sub-step of preparing a pasteurized mixture comprising whole and/or skimmed milk and cream, said pasteurized mixture preferably having an alkaline phosphatase value lower than 350 mU/l, and wherein it also includes one of the following sub-steps:

  • inducing a lactic fermentation of said pasteurized mixture through inoculation of said pasteurized mixture with mesophilic and/or thermophilic lactic bacteria at a temperature between 20 °C and 40°C, said inoculation leading to an acid coagulum having a pH between 4.3 and 5; or
  • adding lactic acid to said pasteurized mixture, said addition causing an acid coagulum having a pH between 5.2 and 5.9.

and wherein said state close to expiry of the conservation period is calculated as T=P/2, where T is the time point from which the cheese can be used in the method and P is its standard shelf life measured at +6°C.

2. Method according to claim 1, wherein said fresh and/or soft cheese is defined by one or more of the following parameters:

  • a moisture between 45% and 65% by weight of the quantity of said cheese;
  • a dry extract between 30% and 55% by weight of the quantity of said cheese.

3. Method according to any one of the preceding claims, wherein the step of eliminating an excess moisture comprises one or more of the following sub-steps:

  • separating said excess moisture by centrifugation;
  • separating said excess moisture by ultrafiltration;
  • separating said excess moisture by filtration.

4. Method according to any one of the preceding claims, wherein the step of providing fresh and/or soft cheese comprises a sub-step of introducing said fresh and/or soft cheese into a processing vessel preferably made of steel and even more preferably comprising:

  a. stirring means arranged inside said processing vessel and preferably comprising at least one rotary blade, said rotary blade being operated at a speed preferably not exceeding 10 rpm; and
  b. heating means associated with said processing vessel and preferably being active on the fresh and/or soft cheese and on the acid coagulum by direct injection of steam or by thermal exchange through a wall of said processing vessel.

5. Method according to claim 4, wherein the step of mixing the fresh cheese takes place in said processing vessel while maintaining one or more of the following operating parameters:

  a. a stirring temperature between 50 °C and 95 °C; and
  b. a residence time, at said stirring temperature, at least equal to or greater than 2 minutes.

6. Method according to any one of the preceding claims, wherein it further comprises a step of packaging the dairy product, said packaging step being preferably carried out while maintaining a temperature of the re-processed dairy product equal to a temperature of the step of mixing the fresh and/or soft cheese to the acid coagulum and being even more preferably carried out by sending the re-processed dairy product into hermetically sealed containers.

**Patentansprüche**

1. Verfahren zur Herstellung eines Milchprodukts, **dadurch gekennzeichnet, dass** es die folgenden Schritte umfasst:

  • Bereitstellen einer Menge an Frisch- und/oder Weichkäse, der Frisch- und/oder Weichkäse, der eine Standard-Haltbarkeitsdauer zwischen 15 Tagen und 60 Tagen aufweist und sich in einem Konservierungszustand kurz vor Ablauf der Konservierungsdauer befindet;

• Bereitstellen einer Menge an saurem Koagulat;

• Mischen der Mengen an Frisch- und/oder Weichkäse und saurem Koagulat, wodurch eine Menge eines wiederaufbereiteten Milchprodukts erhalten wird; und

• Entfernen einer überschüssigen Feuchtigkeit aus der Menge an Frisch- und/oder Weichkäse und/oder aus der Menge an saurem Koagulat und/oder aus der Menge an wiederaufbereitetem Milchprodukt, wobei:

(a) jeder des Frisch- und/oder Weichkäses, des sauren Koagulats und des wiederaufbereiteten Milchprodukts einen zusammengesetzten durchschnittlichen Fettgehalt zwischen 15 Gew.-% und 32 Gew.-% aufweisen und die jeweiligen zusammengesetzten durchschnittlichen Fettgehalte sich um maximal 5 % voneinander unterscheiden,

(b) das saure Koagulat dem Frisch- und/oder Weichkäse in einem Gewichtsverhältnis von kleiner oder gleich 2:1 zugesetzt wird, und

(c) der Schritt des Bereitstellens des sauren Koagulats den Unterschritt des Herstellens einer pasteurisierten Mischung umfasst, die Voll- und/oder Magermilch und Sahne umfasst, die pasteurisierte Mischung vorzugsweise einen alkalischen Phosphatase-Wert von weniger als 350 mU/l aufweist und wobei sie auch einen der folgenden Unterschritte umfasst:

• Induzieren einer Milchsäuregärung der pasteurisierten Mischung durch Beimpfung der pasteurisierten Mischung mit mesophilen und/oder thermophilen Milchsäurebakterien bei einer Temperatur zwischen 20 °C und 40 °C, die Beimpfung zu einem sauren Koagulat, das einen pH-Wert zwischen 4.3 und 5 aufweist, führt; oder

• Hinzufügen von Milchsäure zu der pasteurisierten Mischung, die Zugabe ein saures Koagulat verursacht, das einen pH-Wert zwischen 5.2 und 5.9 aufweist.

und wobei der Zustand kurz vor Ablauf der Konservierungsdauer als T=P/2 berechnet wird, worin T der Zeitpunkt ist, ab dem der Käse in dem Verfahren verwendet werden kann, und P seine Standard-Lagerfähigkeit ist, gemessen bei +6°C.

2. Verfahren gemäß Anspruch 1, wobei der Frisch- und/oder Weichkäse durch einen oder mehrere der folgenden Parameter definiert ist:

• eine Feuchtigkeit zwischen 45 Gew.-% und 65 Gew.-% der Menge des Käses;

• einen Trockenextrakt zwischen 30 Gew.-% und 55 Gew.-% der Menge des Käses.

3. Verfahren gemäß einem der vorhergehenden Ansprüche, wobei der Schritt des Entfernens einer überschüssigen Feuchtigkeit einen oder mehrere der folgenden Unterschritte umfasst:

• Abtrennen der überschüssigen Feuchtigkeit durch Zentrifugation;

• Abtrennen der überschüssigen Feuchtigkeit durch Ultrafiltration;

• Abtrennen der überschüssigen Feuchtigkeit durch Filtration.

4. Verfahren gemäß einem der vorhergehenden Ansprüche, wobei der Schritt des Bereitstellens von Frisch- und/oder Weichkäse einen Unterschritt des Einbringens des Frisch- und/oder Weichkäses in ein Verarbeitungsgefäß, vorzugsweise aus Stahl, umfasst und weiter bevorzugt umfasst:

a. Rührmittel, die im Inneren des Verarbeitungsgefäßes angeordnet sind und vorzugsweise mindestens eine rotierende Klinge umfassen, die rotierende Klinge wird mit einer Geschwindigkeit betrieben, die vorzugsweise 10 U/min nicht überschreitet; und

b. Heizmittel, die mit dem Verarbeitungsgefäß verbunden sind und vorzugsweise auf den Frisch- und/oder Weichkäse und auf das saure Koagulat durch direkte Dampfinjektion oder durch Wärmeaustausch durch eine Wand des Verarbeitungsbehälters aktiv sind.

5. Verfahren gemäß Anspruch 4, wobei der Schritt des Mischens des Frischkäses in dem Verarbeitungsgefäß stattfindet, während einer oder mehrere der folgenden Betriebsparameter aufrechterhalten werden:

a. eine Rührtemperatur zwischen 50 °C und 95 °C; und

b. eine Verweilzeit bei der Rührtemperatur von mindestens gleich oder größer als 2 Minuten.

**6.** Verfahren gemäß einem der vorhergehenden Ansprüche, wobei es ferner einen Schritt des Verpackens des Milchprodukts umfasst, der Verpackungsschritt vorzugsweise durchgeführt wird, während eine Temperatur des wiederaufbereiteten Milchprodukts aufrechterhalten wird, gleich einer Temperatur des Schritts des Mischens des Frisch- und/oder Weichkäses mit dem sauren Koagulat, und weiter bevorzugt durchgeführt wird, indem das wiederaufbereitete Milchprodukt in hermetisch verschlossene Behälter gefüllt wird.

**Revendications**

**1.** Méthode de préparation d'un produit laitier, **caractérisée par le fait qu'**elle comprend les étapes suivantes :

• fournir une quantité de fromage frais et/ou à pâte molle, ledit fromage frais et/ou à pâte molle ayant une durée de conservation standard comprise entre 15 jours et 60 jours, et se trouvant dans un état de conservation proche de l'expiration de ladite période de conservation ;
• fournir une quantité de coagulum acide ;
• mélanger lesdites quantités de fromage frais et/ou à pâte molle et de coagulum acide, afin d'obtenir une quantité de produit laitier retransformé ; et
• éliminer l'excès d'humidité de ladite quantité de fromage frais et/ou à pâte molle et/ou de ladite quantité de coagulum acide et/ou de ladite quantité de produit laitier retransformé,

dans lequel :

(a) chacun des fromages frais et/ou à pâte molle, du coagulum acide et du produit laitier retransformé a une teneur moyenne composite en matières grasses comprise entre 15 % et 32 % en poids et les moyennes composites des teneurs en matières grasses respectives diffèrent les unes des autres de 5 % au maximum,
(b) le coagulum acide est ajouté au fromage frais et/ou au fromage à pâte molle dans un rapport en poids inférieur ou égal à 2:1, et
(c) l'étape consistant à fournir le coagulum acide comprend la sous-étape consistant à préparer un mélange pasteurisé comprenant du lait entier et/ou écrémé et de la crème, ledit mélange pasteurisé ayant de préférence une valeur de phosphatase alcaline inférieure à 350 mU/l, et dans laquelle elle comprend également l'une des sous-étapes suivantes :

• induire une fermentation lactique dudit mélange pasteurisé par inoculation dudit mélange pasteurisé avec des bactéries lactiques mésophiles et/ou thermophiles à une température comprise entre 20 °C et 40 °C, ladite inoculation conduisant à un coagulum acide ayant un pH compris entre 4,3 et 5 ; ou
• ajouter de l'acide lactique au mélange pasteurisé, cet ajout provoquant un coagulum acide dont le pH est compris entre 5,2 et 5,9.

et dans lequel l'état proche de l'expiration de la période de conservation est calculé comme T=P/2, où T est le moment à partir duquel le fromage peut être utilisé dans la méthode et P est sa durée de conservation standard mesurée à +6°C.

**2.** Méthode selon la revendication 1, dans laquelle ledit fromage frais et/ou à pâte molle est défini par un ou plusieurs des paramètres suivants :

• une humidité comprise entre 45% et 65% en poids de la quantité dudit fromage ;
• un extrait sec compris entre 30% et 55% en poids de la quantité dudit fromage.

**3.** Méthode selon l'une quelconque des revendications précédentes, dans laquelle l'étape d'élimination d'un excès d'humidité comprend une ou plusieurs des sous-étapes suivantes :

• la séparation dudit excès d'humidité par centrifugation ;
• la séparation dudit excès d'humidité par ultrafiltration ;
• la séparation dudit excès d'humidité par filtration.

**4.** Méthode selon l'une quelconque des revendications précédentes, dans laquelle l'étape de fourniture du fromage frais et/ou à pâte molle comprend une sous-étape d'introduction dudit fromage frais et/ou à pâte molle dans une cuve de traitement, de préférence en acier et, de préférence encore, comprenant :

a. des moyens d'agitation disposés à l'intérieur de ladite cuve de traitement et comprenant de préférence au moins une lame rotative, ladite lame rotative étant actionnée à une vitesse ne dépassant de préférence pas 10 tours/minute ; et

b. des moyens de chauffage associés à ladite cuve de traitement et agissant de préférence sur le fromage frais et/ou à pâte molle et sur le coagulum acide par injection directe de vapeur ou par échange thermique à travers une paroi de ladite cuve de traitement.

5. Méthode selon la revendication 4, dans laquelle l'étape de mélange du fromage frais a lieu dans ladite cuve de traitement tout en maintenant un ou plusieurs des paramètres de fonctionnement suivants :

a. une température d'agitation comprise entre 50 °C et 95 °C ; et

b. un temps de séjour, à ladite température d'agitation, au moins égal ou supérieur à 2 minutes.

6. Méthode selon l'une quelconque des revendications précédentes, dans laquelle elle comprend en outre une étape d'emballage du produit laitier, ladite étape d'emballage étant de préférence réalisée en maintenant une température du produit laitier retransformé égale à une température de l'étape de mélange du fromage frais et/ou à pâte molle au coagulum acide et étant encore plus préférablement réalisée en envoyant le produit laitier retransformé dans des conteneurs hermétiquement fermés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4324804 A

- EP 0535728 A

**Non-patent literature cited in the description**

- *Journal of Diary Science*, 1992, vol. 79 (1), 8-15